# DEMANDE DE BREVET EUROPEEN

(11) **EP 1 043 538 A1**
(43) Date de publication de la demande: **11.10.2000**
(21) Numéro de dépôt: 00400940.3
(22) Date de dépôt: 05.04.2000
(51) Int. Cl.: F16L 55/175

(54) **Procédé et dispositif de colmatage des fuites.**

(30) Priorité: 07.04.1999 FR 9904339
(71) Demandeur: Presto Fuites, 76430 Saint Romain de Colbosc (FR)
(72) Inventeur:
(74) Mandataire: Keib, Gérard

(57) **Abrégé**

Procédé de colmatage des fuites pour un raccord (3) à brides (13) destiné notamment à une canalisation (5), dans lequel:
- on ferme sensiblement une enceinte (33) entre les brides (13) à l'aide de mâchoires (41);
- on empêche la séparation des brides (13) grâce à des moyens supplémentaires distincts des mâchoires (41);
- on injecte une matière de colmatage (51) dans l'enceinte (33);
où l'on empêche la séparation des brides (13) grâce à au moins une pièce de serrage (53), la pièce de serrage (53) étant associée aux deux brides (13) - et non à une seule d'entre elles - en venant en appui sur des faces non en regard (23) de celles-ci, tout en étant dissociée des mâchoires (41), de manière à ne pas être en appui sur ces dernières, le serrage des brides (13) étant ainsi réalisé indépendamment des mâchoires (41).

## Description

L'invention concerne un procédé de colmatage des fuites pour un raccord à brides, destiné notamment à une canalisation.

Elle concerne également un dispositif de colmatage mettant en oeuvre ce procédé.

On connaît la technique de colmatage des fuites pour un raccord à brides disposé sur une canalisation dans laquelle circule notamment un fluide dans des conditions élevées de température et de pression.

Dans un tel raccord, les brides sont généralement fixées de manière inamovible sur deux extrémités de tuyaux, disposées en vis-à-vis et boulonnées.

Les documents FR-2 426 852 et FR-2 518 701 décrivent des dispositifs pour étancher des fuites dans un raccord à brides d'une canalisation, comprenant deux demi-mâchoires munies d'au moins un orifice pour injecter une substance d'obturation à une pression supérieure au fluide circulant dans la canalisation.

De tels dispositifs sont également décrits dans les documents US-4 171 142 et US-4 927 182.

La demanderesse a constaté que ces dispositifs ne permettent pas de colmater complètement les fuites au niveau du raccord.

En effet, quelque temps après la mise en place de ces dispositifs, de nouvelles fuites apparaissent entre les brides et les demi-mâchoires susmentionnées.

On attribue ces nouvelles fuites à l'écartement progressif des brides du fait de la pression élevée de la matière de colmatage qui règne entre elles.

L'étanchéité réalisée entre les brides et les demi-mâchoires se révèle d'ailleurs insuffisante à contenir le fluide.

Cet écartement des brides provoque une déformation plastique du boulonnage assurant la fixation des brides.

Une solution pourrait consister à remplacer un par un les boulons de fixation des brides.

Cependant, du fait des conditions élevées de température et de pression qui règnent dans la canalisation, la suppression d'un simple boulon peut entraîner une rupture du raccord, dont les conséquences sont désastreuses à la fois pour le bâtiment dans lequel chemine la circulation, et - surtout - pour le personnel environnant.

Aussi, certains fabricants ont été amenés à réaliser un serrage complémentaire des brides.

Le document FR-2 670 557 décrit un dispositif de colmatage comprenant deus couronnes qui enserrent les deux brides du raccord sur le pourtour extérieur de leur face de serrage par deux lèvres radiales.

L'étanchéité entre les brides et les couronnes se révèle néanmoins insuffisante, et des fuites peuvent apparaître entre elles.

En effet, il est reconnu que l'étanchéité est optimisée lorsque les couronnes présentent une lèvre saillant vers l'intérieur de l'espace ménagé entre les brides, cette lèvre étant pincée entre ces dernières.

Or la présence des lèvres radiales susmentionnées, qui ont pour fonction de renforcer le bridage du raccord, interdit justement la réalisation de cette étanchéité et nuit de ce fait à l'efficacité du dispositif.

Le document FR-2 544 838 prévoit quant à lui d'empêcher la séparation des brides au moyen de plusieurs pièces en pont. Ces pièces en pont sont associées aux éléments de mâchoires en venant en appui sur eux. En outre, chacune de ces pièces en pont appuie sur une bride.

Selon le document FR-2 544 838, il est prévu nécessairement plusieurs pièces en pont, l'une associée à une bride, l'autre associée à l'autre bride.

Chacune de ces pièces est associée à une seule bride. Elle est par ailleurs associée à l'élément de mâchoire, de manière à être en appui sur lui.

En conséquence, le serrage de brides dépend, selon le document FR-2 544 838, des éléments de mâchoires.

Le fait que le serrage des brides dépende des éléments de mâchoire présente de nombreux inconvénients, dont celui de faire apparaître dans les éléments de mâchoires des contraintes, notamment de flexion.

De telles contraintes de flexion peuvent nuire à l'étanchéité du raccord en provocant l'écartement des surfaces des éléments de mâchoires qui doivent normalement rester en contact avec les brides.

L'invention vise à pallier ces inconvénients en proposant d'assurer un serrage complémentaire des brides, en évitant que n'apparaissent dans les mâchoires des contraintes, notamment de flexion, et sans nuire à l'étanchéité réalisée entre les mâchoires et les brides.

L'invention se distingue de l'art antérieur en premier lieu en ce qu'au lieu de prévoir plusieurs pièces pour le serrage complémentaire des brides, il est possible de n'en prévoir qu'une seule.

En deuxième lieu, au lieu qu'une pièce soit associée à une unique bride, une même pièce peut être associée aux deux brides.

En troisième lieu, au lieu d'être en appui sur un élément de mâchoire, une telle pièce est dissociée de cet élément de mâchoire.

Le procédé et le dispositif permettent donc d'assurer un serrage complémentaire des brides même en l'absence d'éléments de mâchoires, ce qui n'est pas le cas du procédé et du dispositif décrits dans les documents FR-2 544 838 et FR-2 670 557.

A cet effet, l'invention propose un procédé de colmatage des fuites pour un raccord à brides destiné notamment à une canalisation, dans lequel :
- on ferme sensiblement une enceinte entre les brides à l'aide de mâchoires ;
- on empêche la séparation des brides grâce à des moyens supplémentaires distincts des mâchoires ;
- on injecte une matière de colmatage dans l'enceinte.

Selon ce procédé, on empêche la séparation des brides grâce à au moins une pièce de serrage, la pièce de serrage étant associée aux deux brides - et non à une seule d'entre elles - en venant en appui sur des faces non en regard de celles-ci, tout en étant dissociée des mâchoires, de manière à ne pas être en appui sur ces dernières, le serrage des brides étant ainsi réalisé indépendamment des mâchoires.

L'invention propose de plus un dispositif de colmatage apte à mettre en oeuvre le procédé décrit ci-dessus, ce dispositif comprenant au moins une pièce de serrage des brides, laquelle pièce est associée aux deux brides en venant en appui sur des faces non en regard de celles-ci, tout en étant dissociée des mâchoires, de manière à ne pas être en appui sur elles.

Selon une caractéristique, les mâchoires présentent au moins un canal traversant débouchant dans l'enceinte, pour l'injection de la matière de colmatage.

Dans un mode de réalisation, la ou chaque pièce de serrage comprend au moins un élément de serrage en appui sur au moins une partie d'au moins une face non en regard d'au moins une bride.

Par exemple, la ou chaque pièce de serrage comprend une paire d'éléments de serrage assemblés entre eux, chaque élément d'une paire étant disposé en regard de l'autre élément de la paire.

Dans un mode de réalisation, la ou chaque pièce de serrage est disposée à distance des mâchoires.

Dans un autre mode de réalisation, au moins une partie d'au moins une pièce de serrage traverse au moins une mâchoire.

En outre, la ou chaque pièce de serrage comprend au moins un ensemble boulon, écrou, contre-écrou, le ou chaque boulon traversant les éléments de serrage et/ou les mâchoires, le ou chaque écrou étant vissé d'un côté du boulon, et en appui serré sur une surface non en regard d'un élément de serrage, le ou chaque contre-écrou étant vissé de l'autre côté du boulon, en appui serré sur la surface non en regard de l'autre élément de serrage.

Le dispositif peut comprendre des moyens de réglage de l'écartement entre les éléments de serrage, ceux-ci étant montés en porte-à-faux sur les brides.

Dans un mode de réalisation, les moyens de réglage comprennent au moins une vis de réglage disposée entre et coopérant avec des surfaces en regard des éléments de serrage d'une même paire, afin de régler l'écartement entre ces éléments.

D'autres objets et avantages de l'invention apparaîtront dans la description à suivre, de modes de réalisation de l'invention, faite en référence aux dessins annexés, dans lesquels :
- la figure 1 est une vue en plan de dessus d'un dispositif selon l'invention, selon un premier mode de réalisation ;
- la figure 2 est une vue dans un plan transversalement longitudinal du dispositif selon la ligne I-I de la figure 1, où une seul mâchoire est visible ;
- la figure 3 est une vue en coupe du dispositif selon la ligne II-II de la figure 1 ;
- la figure 4 est une vue en plan de dessus d'un dispositif selon l'invention, selon un deuxième mode de réalisation ;
- la figure 5 est une vue dans un plan transversalement longitudinal du dispositif selon la ligne III-III de la figure 4, où une seul mâchoire est visible ;
- la figure 6 est une vue en coupe du dispositif selon la ligne IV-IV de la figure 4;
- la figure 7 est une vue en plan de dessus d'un dispositif selon l'invention, selon un troisième mode de réalisation ; et
- la figure 8 est une vue partielle dans un plan transversalement longitudinal du dispositif de la figure 7.

Sur ces figures est représenté un repère orthogonal XY.

Une direction X longitudinale est sensiblement confondue avec un grand axe de la canalisation. Le terme « axial » est défini par rapport à cette direction.

Une direction Y transversale est sensiblement confondue avec une direction d'un rayon de la canalisation. Cette direction Y est sensiblement perpendiculaire à la direction X longitudinale. Les termes « transversal » et « radial » sont définis par rapport à cette direction.

Un plan transversal T est sensiblement perpendiculaire à la direction longitudinale X, tandis qu'un plan M transversalement longitudinal est défini par les deux directions X longitudinale et Y transversale.

Un dispositif 1 est représenté sur les figures. Ce dispositif est destiné à renforcer, au niveau d'un raccord 3 à brides, l'étanchéité d'une canalisation 5.

La canalisation 5 comprend deux tuyaux 7 sensiblement coaxiaux de sections sensiblement identiques, dont les parties extrêmes 9 respectives coopèrent pour former une jonction 11 sensiblement confondue avec les parties extrêmes 9 des tuyaux 7.

Une bride 13 est prévue sur chaque tuyau 7, à proximité d'une partie extrême 9. La bride 13 est fixée au tuyau 7 de manière inamovible, par exemple la bride 13 est venue de matière avec le tuyau 7, ou elle est soudée à celui-ci.

La bride 13 est une pièce complémentaire du tuyau 7, et comprend une face intérieure 15 sensiblement cylindrique coopérant sensiblement avec une surface extérieure 17 du tuyau, ainsi qu'une face extérieure 19 sensiblement cylindrique.

La bride 13 s'étend sensiblement dans un plan transversal T et possède un axe vertical de symétrie sensiblement confondu avec le grand axe du tuyau.

Les deux brides 13 sont situées en regard l'une de l'autre, leurs faces transversales situées en vis-à-vis étant dites faces en regard 21, tandis que leurs faces transversales non situées en vis-à-vis sont dites faces non en regard 23.

Dans une réalisation, les brides 13 sont de forme sensiblement circulaire dans un plan T transversal, bien qu'elles puissent prendre des formes diverses et variées, tel que carré, rectangle ou autre forme géométrique.

Chaque bride 13 possède un pourtour 25 qui joint la face non en regard 23 et la face extérieure 19, à proximité et le long duquel sont percés des trous traversants 27, par exemple chaque bride est pourvue de huit trous traversants 27 disposés régulièrement le long du pourtour 25.

Les brides sont disposées de telle sorte que les trous 27 de l'une soient situés en regard des trous 27 de l'autre.

Afin d'établir une liaison permanente et sensiblement étanche entre les deux tuyaux 7, les brides 13 sont boulonnées entre elles à l'aide de boulons 29 et d'écrous 31, les boulons 29 étant étendus parallèlement au grand axe de la canalisation 5 et traversant les trous 27 des brides 13, deux écrous 31 étant vissés sur chaque boulon 29 et serrés contre les faces non en regard 23 des brides 13.

Les faces en regard 21 des brides 13 sont situées à distance l'une de l'autre, et définissent un espace libre dit enceinte 33, qui entoure la jonction 11 entre les deux tuyaux 7. Un joint 35 de forme annulaire est disposé sur la jonction 11 en la recouvrant sensiblement entièrement.

Le joint 35 et les brides 13 assurent ainsi une première étanchéité de la canalisation 5 aux fuites de fluides.

Cependant cette première étanchéité peut se révéler insuffisante. En effet, les conditions de température et de pression qui règnent dans la canalisation 5, sont si élevées que des fuites apparaissent dans l'enceinte 33 au niveau du joint 35.

Afin d'assurer une deuxième étanchéité de la canalisation 5 aux fuites, des moyens de fermeture 37 de l'enceinte 33 sont prévus. Ces moyens de fermeture 37 comprennent un cerclage 39 annulaire, disposée en partie autour, et en partie dans l'enceinte 33. Ce cerclage 39 comprend deux mâchoires 41 sensiblement identiques, réunies par boulonnage, ou analogue.

Chaque mâchoire 41 a sensiblement la forme d'un demi-tore de révolution d'axe sensiblement confondu avec le grand axe de la canalisation, et est sensiblement étendue dans un plan transversal.

La mâchoire 41 comprend une protubérance 43 venue de matière, qui s'étend sur une surface interne 45 de la mâchoire 41, et qui est de section transversalement longitudinale sensiblement rectangulaire, apte à être engagée dans l'enceinte 33 tout en assurant sensiblement la fermeture de cette dernière.

Tandis que la surface interne 45 des mâchoires 41 est sensiblement complémentaire des faces extérieures 19 des brides 13, de sorte qu'une fois réunies, les mâchoires 41 ferment sensiblement entièrement l'enceinte 33.

Au moins un canal radial traversant 47, et par exemple une pluralité de canaux 47 radiaux traversants sont prévus dans le cerclage 39. Ces canaux 47 sont au moins en partie taraudés pour y permettre la fixation de robinets d'injection 49 dont une partie extrême est filetée.

Par ces robinets 49 est injectée à l'intérieur de l'enceinte 33 une matière de colmatage 51, telle qu'une résine, un silicone, ou analogue, à une pression sensiblement supérieure à celle du fluide circulant dans la canalisation 5.

Une deuxième étanchéité aux fuites de la canalisation 5 est ainsi réalisée, une fois que la matière de colmatage 51 a durci en remplissant sensiblement complètement l'enceinte 33.

Les brides 13, le cerclage 39 et la matière de colmatage 51 sont alors maintenus en permanence en position autour de la jonction 11, afin de prévenir d'éventuelles fuites et d'assurer la sécurité des personnels amenés à travailler au voisinage de la canalisation 5. En effet, de telles canalisations 5 doivent être aptes à être parcourues vingt-quatre heures par jour par des fluides à des conditions élevées de température et de pression.

Il apparaît cependant que cette deuxième étanchéité n'est pas parfaite, et que la pression de la matière de colmatage 51 est assez importante pour écarter les brides, créant ainsi des contraintes de tension dans le boulonnage de celles-ci.

Ces contraintes de tension sont aptes à rompre les boulons 29 assurant le serrage des brides 13, ce qui impose un serrage complémentaire des brides 13 du raccord 3, à l'aide d'un dispositif 1.

Le dispositif 1 comprend au moins une pièce de serrage 53 des brides 13, qui dans chaque mode de réalisation décrit ci-après, est prévue pour assurer un serrage complémentaire des brides 13 indépendamment du cerclage 39.

La ou chaque pièce de serrage 53 comprend, dans ces modes de réalisation, deux éléments de serrage 57, réunis à l'aide de moyens de serrage 55.

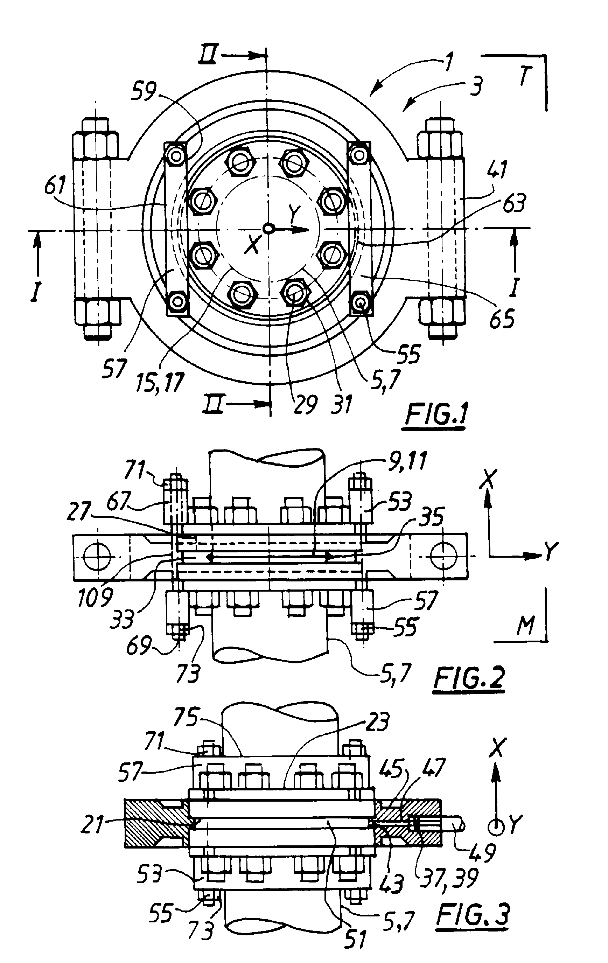

Divers modes de réalisation sont prévus pour ce dispositif 1. On décrit maintenant un premier mode de réalisation, en référence au figures 1 à 3.

Dans ce mode de réalisation, sont prévues deux pièces de serrage 53. Les éléments de serrage 57 sont sensiblement en forme de barreaux parallélépipédiques, chaque élément de serrage 57 étant en appui sur au moins une partie d'une face non en regard 23 d'une bride 13.

L'élément de serrage 57 comprend deux faces sensiblement parallèles et étendues dans un plan T transversal, respectivement avant 59 et arrière 61.

La face avant 59 est tournée vers la canalisation 5 et en regard de cette dernière, tandis que la face arrière 61 est tournée à l'opposé, non en regard de la canalisation 5.

L'élément de serrage 57 s'étend donc sensiblement dans un plan T transversal, une portion médiane 63 de celui-ci, étant en appui sur la face non en regard 23 de la bride 13, tandis que des portions d'extrémité 65 de l'élément de serrage 57 sont en porte-à-faux par rapport à la bride 13.

Du fait de la présence des tuyaux 7 sensiblement au centre de la bride 13, et des boulons 29 et écrous 31 à proximité du pourtour 25 de celle-ci, la surface de contact entre la bride 13 et l'élément de serrage 57 s'étend sensiblement entre deux écrous 31 consécutifs, à proximité et le long du pourtour 25 de la bride 13.

Les éléments de serrage 57 sont assemblés par paire de chaque côté des brides 13, les deux paires étant disposées sensiblement symétriquement par rapport au grand axe de la canalisation 5, tandis que les éléments 57 d'une même paire sont disposés sensiblement dans un même plan parallèle à la direction longitudinale, et perpendiculaire à la direction transversale.

Les portions d'extrémité 65 des éléments de serrage 57 sont percées d'alésages 67 traversants longitudinaux disposés en regard les uns des autres, pour les éléments de serrage 57 d'une même paire.

Les moyens de serrage 55 permettent de maintenir les éléments de serrage 57 entre eux par paire, l'ensemble formé par une paire d'éléments de serrage 57 et des moyens de serrage 55 constituant une pièce de serrage 53, cette pièce assurant un serrage complémentaire des brides 13.

Les moyens de serrage 55 comprennent quatre ensembles boulon 69/écrou 71/contre-écrou 73 aptes à être associés aux éléments de serrage 57. Cette association consiste à introduire, selon une direction sensiblement longitudinale, le boulon 69 dans les deux alésages 67 en regard de deux éléments de serrage 57 d'une même paire, et à visser l'écrou 71 et le contre-écrou 73 sur le boulon 69 respectivement, contre des surfaces non en regard 75 des éléments de serrage 57.

L'étanchéité est donc améliorée par l'adjonction des éléments de serrage 57 des brides 13, et des moyens de serrage 55 de ceux-ci. Pour que l'étanchéité soit assurée, les écrous 71 et contre-écrous 73 sont serrés à force sur les boulons, 69 contre les surfaces non en regard 75 des éléments de serrage 57.

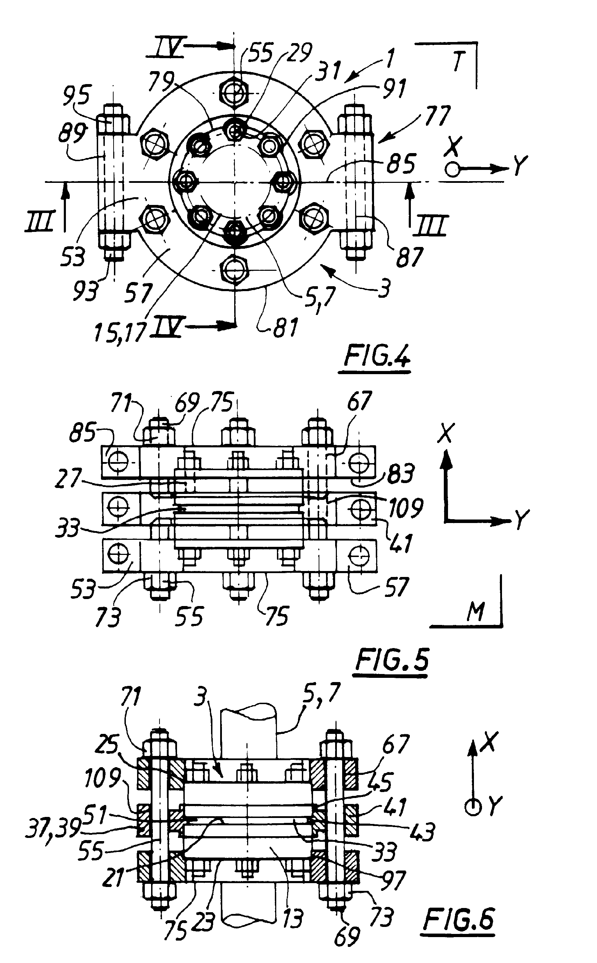

On décrit à présent un deuxième mode de réalisation du dispositif 1, en référence aux figures 4 à 6. Dans cette description, les pièces possédant la ou les mêmes fonctions que dans le premier mode de réalisation conservent les mêmes références.

Dans ce mode de réalisation, les pièces de serrage 53 comprennent deux éléments de serrage 57 annulaires sensiblement identiques, disposés sensiblement en vis-à-vis et en appui sur les faces non en regard 23 des brides 13.

Chacun de ces éléments de serrage 57 est en forme de demi-tore, d'axe de révolution sensiblement confondu avec le grand axe de la canalisation 5, à section sensiblement rectangulaire.

Chaque élément de serrage 57 comprend une paroi interne 79 et une paroi externe 81 de forme sensiblement circulaire dans un plan T transversal, ainsi que deux surfaces respectivement en regard 83 et non en regard 75, séparant les parois interne 79 et externe 81.

L'élément de serrage 57 comporte en outre deux parois terminales 85 étendues sensiblement dans un plan M transversalement longitudinal, ainsi que deux fourreaux 87 venus de matière et dont une face est confondue avec la paroi terminale 85.

Chaque fourreau 87 est percé d'un trou 89 traversant, d'axe sensiblement perpendiculaire à la paroi terminale 85, tandis que des alésages 67 traversants longitudinaux sont prévus dans l'élément de serrage 57, par exemple trois alésages 67 sensiblement régulièrement espacés sont prévus.

Une fois l'élément de serrage 57 positionné sur la bride 13, la surface en regard 83 est au moins en partie en appui sur la face non en regard 23 de la bride 13. En effet, une dimension transversale ou diamètre intérieur de l'élément de serrage 57 est inférieure au diamètre extérieur de la bride, ce qui permet de réaliser cet appui.

Afin de préserver l'accès au boulonnage des brides 13 tout en évitant que l'élément de serrage 57 soit en appui sur ce boulonnage, la paroi interne 79 est pourvue de niches 91 en forme de creux cylindriques longitudinaux, dans lesquelles sont positionnés les écrous 31 du boulonnage des brides 13.

Les moyens de serrage 55 des éléments de serrage 57 sont analogues à ceux décrits dans le premier mode de réalisation, et comprennent une pluralité d'ensembles boulon 69/écrou 71/contre-écrou 73 aptes à être associés aux éléments de serrage 57.

Le montage du dispositif 1 sur le raccord 3 est effectué comme suit.

Deux éléments de serrage 57 sont assemblés autour de la canalisation 5 à proximité de la face non en regard 23 d'une bride 13, tandis que deux autres éléments de serrage 57 sont assemblés autour de la canalisation à proximité de la face non en regard 23 de l'autre bride.

Les parois terminales 85 des éléments de serrage 57 sont disposées en regard les unes des autres, les éléments de serrage 57 étant boulonnés entre eux au moyen de tiges filetées 93 traversant les trous 89 des fourreaux 87, et d'écrous 95 vissés sur la tige filetée 93 et serrés contre les fourreaux 87.

Deux ensembles de serrage 77 sont ainsi constitués. Les deux ensembles de serrage 77 sont ensuite positionnés en regard l'un de l'autre, les axes de leurs alésages 67 coïncidant sensiblement, les surfaces en regard 75 étant en appui sur les faces non en regard 23 des brides 13.

Les ensembles de serrage 77 sont alors boulonnés entre eux afin d'assurer le serrage complémentaire des brides 13 pour parfaire l'étanchéité du raccord 3.

Comme dans le premier mode de réalisation, les écrous 71 et contre-écrous 73 sont serrés à force sur les boulons 69 contre les surfaces non en regard 75 des éléments de serrage 57.

Dans une variante, chaque élément de serrage 57 comprend un épaulement 97 entre la paroi interne 79 et la surface en regard 83. Cet épaulement 97 est sensiblement complémentaire du pourtour 25 de la bride 13.

L'épaulement 97 permet de faciliter le positionnement axial de l'élément de serrage 57, et donc des ensembles de serrage 77, autour des brides 13.

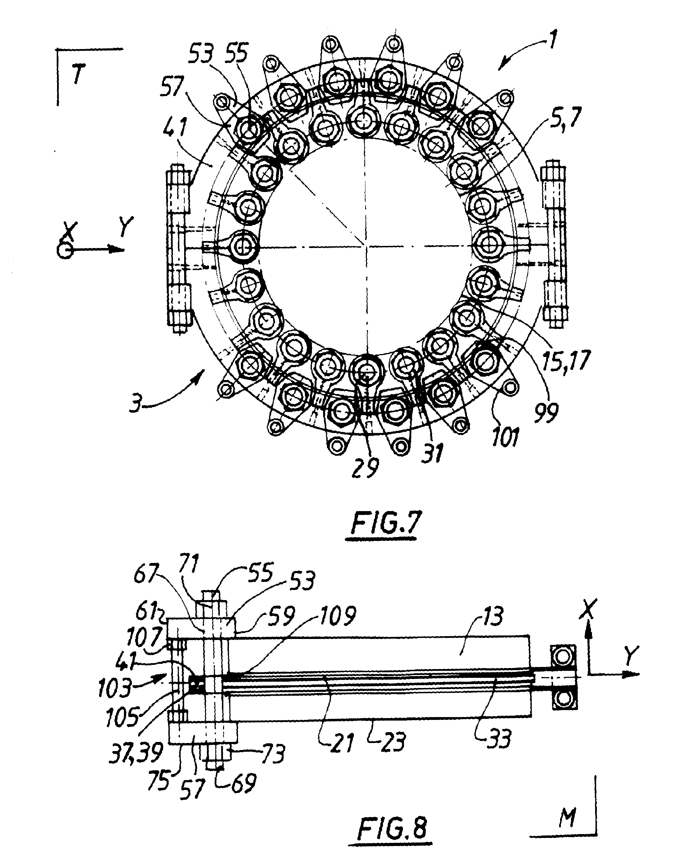

On décrit à présent un troisième mode de réalisation, en référence aux figures 7 et 8. Dans cette description, les pièces possédant la ou les mêmes fonctions que dans le premier et/ou le deuxième mode de réalisation conservent les mêmes références.

Dans ce mode de réalisation, le dispositif 1 comprend une pluralité de pièces de serrage 53. Les éléments de serrage 57 sont assemblés par paire, un premier élément 57 d'une paire étant en appui sur une première bride 13, tandis qu'un deuxième élément 57 de la paire est en appui en regard du premier, sur une deuxième bride 13.

Comme dans les modes de réalisation précédents, chaque élément de serrage 57 comprend deux surfaces respectivement en regard 83 et non en regard 75 sensiblement parallèles, ainsi que deux parties extrêmes respectivement avant 99 et arrière 101.

L'élément de serrage 57 est de forme sensiblement allongée dans un plan transversal, tandis que sa section dans un plan transversalement longitudinal est de forme sensiblement rectangulaire.

L'élément de serrage 57 est disposé sur la bride 13 de telle sorte que sa partie extrême avant 99 est tournée vers la canalisation 5, tandis que sa partie extrême arrière 101 est tournée à l'opposé. En outre, il est percé sensiblement en son centre d'un alésage 67 traversant longitudinal, sensiblement à mi-distance des parties extrêmes 99, 101.

La surface en regard 83 du premier élément de serrage 57 est en appui contre la face non en regard 23 de la première bride 13, tandis que la surface non en regard 75 du deuxième élément de serrage 57 est en appui contre la face non en regard 23 de la deuxième bride 13.

La présence du boulonnage sur la face non en regard de la bride 13 limite sur celle-ci la place disponible pour l'appui des éléments de serrage 57. Ainsi, seule une partie de la surface en regard 83 à proximité de la partie extrême avant 99 de l'élément de serrage 57 est en appui sur la face non en regard 23 de la bride 13, à proximité de la paroi externe 81.

La partie extrême arrière 101 est donc en porte-à-faux par rapport à la bride 13. Des moyens de réglage 103 sont disposés entre les deux éléments de serrage 57. Les moyens de réglage 103 comprennent une vis de réglage 105 ainsi que deux contre-écrous 107.

La vis de réglage 105 est disposée sensiblement longitudinalement entre les deux éléments de serrage 57 en coopérant avec celles-ci, sensiblement à proximité de leurs parties extrêmes arrières 101.

Les contre-écrous 107 sont vissés sur la vis de réglage 105, et en appui serré contre les surfaces en regard 83 des éléments de serrage 57. Les moyens de réglage 103 permettent donc à la fois de régler l'écartement entre les éléments de serrage 57, par exemple pour l'adapter à la distance séparant les faces non en regard 23 des brides 13, et de réaliser un contre-appui pour les éléments de serrage 57 lors de leur fixation sur les brides 13.

Une fois les éléments de serrage 57 positionnées sur les brides, l'écartement entre les surfaces non en regard 75 ayant été ajusté sensiblement à la distance séparant les faces non en regard 23 des brides 13, les moyens de serrage 55 sont associés aux éléments de serrage 57.

Comme dans les précédents modes de réalisation, les moyens de serrage 55 comprennent au moins un ensemble boulon 69/écrou 71/contre-écrou 73. Un tel ensemble peut être prévu pour chaque paire d'éléments de serrage 57, pour former une pièce de serrage 53.

Les moyens de serrage 55 sont associés aux éléments de serrage 57 en introduisant les boulons 69 dans les alésages 67 des éléments de serrage 57 en regard d'une même paire, et en vissant à force les écrous 71 et les contre-écrous 73 sur les boulons 69 et contre les surfaces non en regard 75 des éléments de serrage 57.

Comme dans les modes de réalisation décrits plus haut, les éléments de serrage 57 et les moyens de serrage 55 sont prévus pour ne pas interférer avec les moyens de fermeture 37, plus particulièrement avec le cerclage 39.

Ceci vise notamment à éviter que n'apparaissent dans le cerclage 39, qui est déjà soumis aux contraintes dues à la pression de la matière de colmatage, des contraintes supplémentaires, par exemple de flexion, néfastes à la bonne étanchéité du raccord.

A cette fin, la configuration et la disposition des éléments de serrage 57 est telle que dans aucun des modes de réalisation décrits, ces derniers ne soient en appui sur les mâchoires 41, ni n'interfèrent avec celles-ci.

De même, les moyens de serrage 55, et en particulier les boulons 69, peuvent être disposés à distance du cerclage 39, par exemple à l'extérieur de celui-ci.

Pour éviter que cette disposition des boulons 69 à l'extérieur du cerclage 39 n'impose aux éléments de serrage 57 des dimensions trop importantes, ce qui d'une part alourdit le dispositif 1, et d'autre part fait apparaître dans les éléments de serrage 57 des contraintes supplémentaires, notamment de flexion, le cerclage 39 est dans une réalisation pourvu de passages 109 longitudinaux traversants.

Ces passages 109 sont aptes à permettre aux boulons 69 de traverser le cerclage 39 sans interférer avec lui, le cerclage 39 n'intervenant pas dans le serrage complémentaire des brides 13 réalisé par le dispositif 1.

## Revendications

1. Procédé de colmatage des fuites pour un raccord (3) à brides (13) destiné notamment à une canalisation (5), dans lequel :
- on ferme sensiblement une enceinte (33) entre les brides à l'aide de mâchoires (41) ;
- on empêche la séparation des brides (13) grâce à des moyens supplémentaires distincts des mâchoires ;
- on injecte une matière de colmatage (51) dans l'enceinte (33) ;
caractérisé en ce que l'on empêche la séparation des brides grâce à au moins une pièce de serrage (53), la pièce de serrage (53) étant associée aux deux brides (13) - et non à une seule d'entre elles - en venant en appui sur des faces non en regard (23) de celles-ci, tout en étant dissociée des mâchoires (41), de manière à ne pas être en appui sur ces dernières, le serrage des brides (13) étant ainsi réalisé indépendamment des mâchoires.

2. Dispositif de colmatage apte à mettre en oeuvre le procédé selon la revendication 1, ce dispositif comprenant au moins une pièce de serrage (53) des brides (13), laquelle pièce (53) est associée aux deux brides (13) en venant en appui sur des faces non en regard (23) de celles-ci, tout en étant dissociée des mâchoires (41), de manière à ne pas être en appui sur elles.

3. Dispositif de colmatage selon la revendication 2, caractérisé en ce que les mâchoires (41) présentent au moins un canal (47) traversant débouchant dans l'enceinte, pour l'injection de la matière de colmatage (51).

4. Dispositif de colmatage selon la revendication 2 ou la revendication 3, caractérisé en ce que la ou chaque pièce de serrage (53) comprend au moins un élément de serrage (57) en appui sur au moins une partie d'au moins une face non en regard (23) d'au moins une bride (13).

5. Dispositif de colmatage selon l'une des revendications 2 à 4, caractérisé en ce que la ou chaque pièce de serrage (53) comprend une paire d'éléments de serrage (57) assemblés entre eux, chaque élément (57) d'une paire étant disposé en regard de l'autre élément (57) de la paire.

6. Dispositif de colmatage selon l'une des revendications 2 à 5, caractérisé en ce que la ou chaque pièce de serrage (53) est disposée à distance des mâchoires (41).

7. Dispositif de colmatage selon l'une des revendications 2 à 6, caractérisé en ce qu'au moins une partie d'au moins une pièce de serrage (53) traverse au moins une mâchoire (41).

8. Dispositif de colmatage selon l'une des revendications 2 à 7, caractérisé en ce que la ou chaque pièce de serrage (53) comprend au moins un ensemble boulon (69), écrou (71), contre-écrou (73), le ou chaque boulon (69) traversant les éléments de serrage (57) et/ou les mâchoires (41), le ou chaque écrou (71) étant vissé d'un côté du boulon (69), et en appui serré sur une surface non en regard (75) d'un élément de serrage (57), le ou chaque contre-écrou (73) étant vissé de l'autre côté du boulon (69), en appui serré sur la surface non en regard (75) de l'autre élément de serrage (57).

9. Dispositif de colmatage selon l'une des revendications 2 à 8, caractérisé en ce qu'il comprend des moyens de réglage (103) de l'écartement entre les éléments de serrage (57), ceux-ci étant montés en porte-à-faux sur les brides (13).

10. Dispositif de colmatage selon la revendication 9, caractérisé en ce que les moyens de réglage (103) comprennent au moins une vis de réglage (105) disposée entre et coopérant avec des surfaces en regard (83) des éléments de serrage (57) d'une même paire, afin de régler l'écartement entre ces éléments (57).
